# EUROPEAN PATENT SPECIFICATION

(11) **EP 2 918 828 B1**
(45) Date of publication and mention of the grant of the patent: **26.07.2023**
(21) Application number: 14158707.1
(22) Date of filing: 11.03.2014
(51) Int. Cl.: F03D 80/80, F03D 13/10, F03D 13/20

(54) **Cable support arrangement**
Kabelhalteranordnung
Agencement de support de câble

(43) Date of publication of application: 16.09.2015
(73) Proprietor: Siemens Gamesa Renewable Energy A/S, 7330 Brande (DK)
(72) Inventor: Olesen, Joern, 7100 Vejle (DK)
(74) Representative: SGRE-Association

(56) References cited:
- EP-A2- 2 505 832
- WO-A1-2010/108538
- DE-A1-102011 076 941
- DK-B1- 177 637

## Description

The invention describes a cable support arrangement realised to support a plurality of power cable bundles in an upper region of a wind turbine tower; a wind turbine; and a method of installing such a cable support arrangement in an upper region of a wind turbine tower.

The nacelle of a wind turbine is usually mounted to the tower by means of a yaw interface, so that the nacelle can be yawed. This allows the rotor blades to be optimally positioned into the wind. Electricity produced by the wind turbine generator is transported from the generator's windings to a transmission cable arrangement in the wind turbine tower, and usually transported using multiple power-phase cable sets, depending on the power rating of the wind turbine. For example, power from a 4 MW generator can be transported over seven sets of three-phase cables, so that twenty-one power cables are required. The power cables extend from the generator into the tower and down through the tower to an overland or subsea power transmission line. The power cables themselves are heavy, and must be supported in the tower. Therefore, over most of the tower height, the cables are fixed by suitable holders in an essentially vertical stationary transmission cable arrangement.

However, an upper portion of the power cables - i.e. some length of a power cable arrangement between the generator and the stationary fixed transmission cable arrangement in the tower - must allow for a yaw motion of the nacelle. It is usual for a yaw drive to be able to turn the nacelle through two full revolutions in either direction. Therefore, this length of the power cable arrangement must be flexible enough to permit such a rotational motion of the nacelle. To this end, known cable arrangements in a flexible portion between the yaw drive level and the transmission cable arrangement - referred to as a "power cable twist arrangement" or "power cable loop" - try to hold the cables in such a way as to keep the individual cables apart, and to ensure that the rotational displacement of the nacelle is transferred evenly over the length of the flexible portion. For example, in one approach, the individual cables of the power cable twist arrangement can be passed through holes in a number of cable guides. Several cable guides can be used and spaced at intervals. Such an arrangement ensures that the individual cables of the power cable twist arrangement are held at a distance apart over the length of the power cables in this flexible portion.

A power cable is usually a thick copper cable encased in insulating sheath, and only has a limited degree of flexibility. However, when the wind turbine is operating at or near its rated power output, such a cable becomes hot. When the flexible portion twists to follow a yawing motion of the nacelle, a power cable can be pressed with some force against the edge of the cable guide hole through which it passes, so that the cable is stressed. A hot power cable can become bent or otherwise distorted as a result. For example, the insulation of the cable can wear, revealing the cable core (usually multiple strands of copper wire twisted into a cable). Repeated stress can result in damage to the core of the cable, for example the individual copper strands can fracture or break. Such damage can lead to a cable fire.

Another problem associated with the known cable guide arrangements is that the overall power cable loop is very large and cumbersome. Usually, the power cable loop is assembled by arranging a suitable number of cable guides over a set of interface power cables that will connect the generator to the transmission cables secured to the tower wall. For example, eight cable guides, each with twelve through-holes, can be arranged at intervals over a set of twelve interface power cables. The position of a cable guide along the power cable loop is fixed by securing it to one or more of the power cables, for example using a cable tie. However, such ties should not be too tight, since some degree of freedom is needed to allow the power cables to twist relative to each other and relative to the cable guide during a yawing motion. As a result, a cable guide can slip downwards along the power cable loop, so that eventually the cable guides are no longer positioned at regular intervals and cannot fulfil their intended functions of keeping the power cables apart and distributing the yawing motion along the length of the power cable loop. In an alternative approach, an annular configuration of power cables is arranged about the perimeter of a cable guide or spacer as proposed in DK177637B1, and the amount by which one spacer twists relative to the next spacer is limited by an assembly of complementary movable parts arranged about a tubular suspension assembly that extends through a central hole in each spacer. However, this assembly is complex and comprises many parts, so that installation of the power cable twist arrangement is correspondingly costly.

The length of the flexible portion or power cable loop can be about 10 - 12 m or more. Once the wind turbine tower has been erected, a crane is required to hoist the power cable loop into place. The crane must be able to lift to a height corresponding to the sum of the tower height and the power cable loop length. This requirement adds significantly to the overall costs of installing a wind turbine, particularly at difficult locations such as offshore wind parks.

DE102011076941A1, EP2505832A2 and WO2010108538A1 are relevant examples of prior art which disclose cable support arrangement in wind turbine towers.

It is therefore an object of the invention to provide an improved way of arranging power cables between the generator and the tower of a wind turbine. This object is achieved by the cable support arrangement of claim 1; by the wind turbine of claim 9; and by the method of claim 10 of installing a cable support arrangement.

According to the invention, the cable support arrangement is realised to support a plurality of power cable bundles in an upper region of a wind turbine tower and comprises a plurality of cable bundle guides, wherein a cable bundle guide comprises a plurality of through-openings, wherein each through-opening is realised to encompass a power cable bundle comprising a plurality of power cables; and an offset fixation means realised to maintain an offset distance between consecutive cable bundle guides, wherein the offset fixation means extends between each pair of consecutive cable bundle guides and is fixed to each of the pair of consecutive cable bundle guides.

In the context of the invention, the power cable bundles in the upper region of a wind turbine tower are to be understood to comprise the flexible portion or power cable loop, whose function has been described above. An advantage of the cable support arrangement according to the invention is that the power cables are no longer held separately in cable guides. Instead, the power cables are arranged in bundles, and each bundle passes through a through-opening of a cable bundle guide. As a result, the diameter of a cable bundle guide can be significantly smaller than a cable guide of the type described in the introduction.

Another advantage of the cable support arrangement according to the invention is that the offset fixation means ensures that the cable bundle guides remain at regular intervals along the flexible portion, so that these always fulfil their intended functions of keeping the power cable bundles apart and distributing the yawing motion along the length of the flexible portion. In the cable support arrangement according to the invention, adjacent cable bundle guides are connected by the offset fixation means, so that it is sufficient to secure the position of only one upper cable bundle guide at some point in order to fix the positions of the remaining cable bundle guides. The invention does away with the need to secure each guide to a power cable, and avoids the problem of a guide slipping down along the flexible portion power cable loop.

According to the invention, the wind turbine comprises a nacelle mounted on top of a tower; a generator inside the nacelle for generating electricity; a plurality of power cable bundles extending from the generator to a stationary transmission cable arrangement in an upper region of the tower, and arranged to allow a yaw displacement of the nacelle; and a cable support arrangement according to the invention to support the plurality of power cable bundles in the upper region of the tower.

An advantage of the wind turbine according to the invention is that the flexible portion of the power cables between the generator and the stationary transmission cable arrangement is managed in a reliable and straightforward fashion, since the cable support arrangement according to the invention can be mounted easily and performs with a high degree of reliability.

According to the invention, the method of installing such a cable support arrangement in an upper region of a wind turbine tower comprises the steps of sliding the plurality of cable bundle guides over a previously installed plurality of power cable bundles; securing an upper cable bundle guide in the vicinity of a power cable entry point; and securing a lower cable bundle guide in the vicinity of a power cable termination point.

An advantage of the method according to the invention is that it is very straightforward to carry out. The steps of the method can be carried out before the wind turbine tower is erected, i.e. while the tower is still lying in a horizontal position prior to installation. The cable bundle guides can simply be drawn over the power cable bundles as these lie in place. Adjacent cable bundle guides can already have been connected with offset fixation means, or this step can just as easily be performed at this stage. The cable bundle guides can be left in a group at one end of the flexible portion, for example at the power cable entry point. One cable bundle guide can be secured near the power cable entry point. Later, when the tower is erected, the remaining cable bundle guides can simply slide down along the flexible portion until they reach the positions predetermined by the offset fixation means. The method according to the invention does away with the expensive and hazardous step of having to lift a previously assembled power cable flexible portion above the tower in order to lower it into the tower from above.

Particularly advantageous embodiments and features of the invention are given by the dependent claims, as revealed in the following description. Features of different claim categories may be combined as appropriate to give further embodiments not described herein.

When referring to the flexible portion of the power cables between the yaw drive level and the transmission cable arrangement, the terms "power cable twist arrangement", "power cable loop" and "flexible portion" may be used interchangeably in the following.

At least the first method step described above is carried out while the wind turbine tower is in a horizontal position. The step of securing the upper cable bundle guide in the vicinity of a power cable entry point and/or the step of securing the lower cable bundle guide in the vicinity of the power cable termination point might then be performed after the wind turbine tower has been hoisted into place by a crane.

When the nacelle is yawed, the power cable loop can twist or untwist, depending on the direction and the extent of rotation of the nacelle. The power cable loop has an actual length, for example the distance between entry point and termination point. As the power cable loop twists, its effective length will shorten. As it untwists, its effective length will increase. Therefore, the power cable bundle is preferably secured at its lower end to a vertical displacement means, also referred to as a "torque arm". This can move up (or down) in response to a shortening (or lengthening) of the power cable loop when the nacelle is yawed. Preferably, the lowest cable bundle guide is secured to this vertical displacement means.

Preferably, the offset fixation means comprises a connecting wire or chain extending between each pair of consecutive cable bundle guides. The length of the wire or chain preferably determines a maximum offset distance between the consecutive cable bundle guides. As indicated above, both ends of such a connecting wire are fixed to each of the pair of consecutive cable bundle guides.

As the power cable loop twists or untwists in response to a yawing motion of the nacelle, the vertical length of the power cable loop will change, and the cable bundle guides will undergo a vertical displacement accordingly. During the twisting and untwisting, it is preferable that the cable bundle guides remain essentially horizontal. Therefore, in a preferred embodiment of the invention, the offset fixation means comprises at least three connecting wires extending between a pair of consecutive cable bundle guides. Since three points can define a plane, the connecting wires are preferably distributed equidistantly between two adjacent cable bundle guides. In this way, a favourably horizontal orientation can be maintained for the cable bundle guides, regardless of the degree of twist of the power cable loop.

A power cable loop for a 2.3 - 4.0 MW wind turbine, for example, can have a length of 10 - 12 m. To ensure that a yawing motion of up to 720° is evenly distributed over the length of the power cable loop, in a preferred embodiment of the invention the cable support arrangement preferably comprises at least three, more preferably at least 12, most preferably at least 15 cable bundle guides arranged along the length of the power cable loop.

A cable bundle guide can be manufactured for a specific wind turbine, i.e. with a specific number of through-holes for the power cable bundles of that wind turbine. Preferably, however, a cable bundle guide is manufactured to comprise at least five, more preferably at least seven through-openings.

As indicated above, the thickness or diameter of a power cable loop can be narrower when the power cables are organised in bundles, for example in bundles of three. Therefore, in a preferred embodiment of the invention, a cable bundle guide for a power cable loop, organised in seven bundles of three power cables, has a diameter of at most 400 mm, more preferably at most 375 mm; most preferably at most 350 mm. Such a 'slim' power cable loop is associated with a smaller maximum vertical displacement, i.e. the vertical displacement resulting from a maximum rotational displacement of the nacelle. The vertical displacement of the power cable loop is directly proportional to the spacing between the power cables. For this reason, the spaces between individual cables of a prior art power cable loop result in a greater vertical displacement, compared to the relatively small vertical displacement associated with the "bundled" arrangement of the invention. In one example, the cable support arrangement according to the invention, when used to support seven bundles of three cables, undergoes a vertical displacement of only about 200 mm. This compares favourably to a known arrangement with twenty-one separately guided power cables, which is subject to a vertical displacement of 1200 mm or more.

Preferably, the shape of a through-opening in a cable bundle guide is based on a cross-sectional shape of a power cable bundle. For example, if the power cables are organised in bundles of three, a suitable shape for a through-opening might be essentially triangular, so that the power cable bundle is securely held by the cable bundle guide. Of course, the through-opening is preferably dimensioned to allow some clearance between its edges and the power cable bundle, so that the power cables are not pressed against the edges, thus avoiding damage to the cables.

Preferably, the cable bundle guides for a certain power cable loop comprise an essentially identical arrangement of through-openings.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 shows a wind turbine and illustrates the problem addressed by the invention;
Fig. 2 shows an embodiment of a cable support arrangement according to the invention in a first position;
Fig. 3 shows the cable support arrangement of Fig. 2 in a second position;
Fig. 4 shows an embodiment of a cable bundle guide of a cable support arrangement according to the invention;
Fig. 5 shows a first step of the method according to the invention;
Fig. 6 shows a second step of the method according to the invention;
Fig. 7 shows a prior art power cable loop arrangement;
Fig. 8 shows damage arising to a power cable in the arrangement of Fig. 7.

In the diagrams, like numbers refer to like objects throughout. Objects in the diagrams are not necessarily drawn to scale.

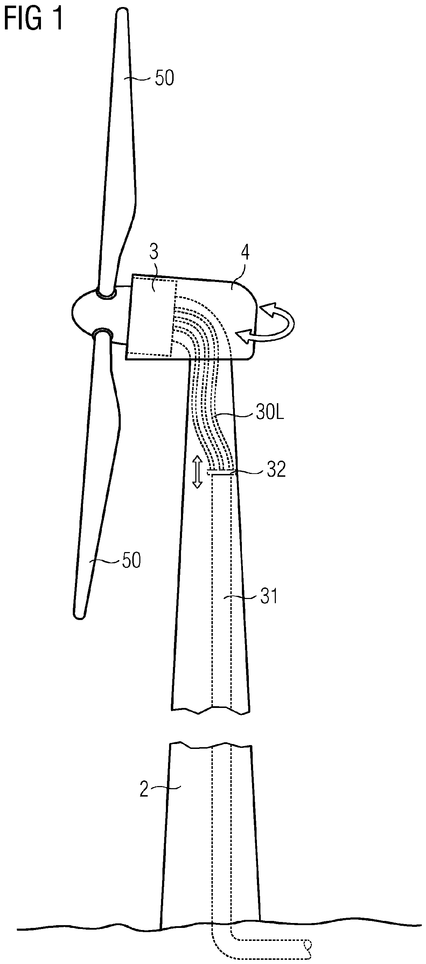

Fig. 1 shows a wind turbine 5, illustrating the problem addressed by the invention. The wind turbine 5 comprises a generator 3 housed in a nacelle 4 mounted on top of a tower 2. The generator 3 generates power as the rotor blades 50 of the wind turbine 5 rotate. The nacelle 4 can be yawed to so that the rotor blades 50 are always optimally placed into the wind. The power is transported over a power cable loop 30L to a fixed transmission cable arrangement 31, for example secured to the wall of the tower 2. The function of the power cable loop 30L is to cope with the rotation of the nacelle 3 about a vertical axis. A nacelle may be yawed up to 720° in one direction before the direction of rotation is reversed. The power cable loop 30L generally comprises a plurality of power cables, depending on the number of generator poles and the number of power phases. A five-pole three-phase generator will have 15 power cables in the power cable loop 30L leading from the generator to the transmission cable arrangement 31. The power cable loop 30L is fixed only at the generator end, and to a vertical displacement means 32 which can move upwards or downwards as the length of the power cable loop 30L changes in response to a yawing action.

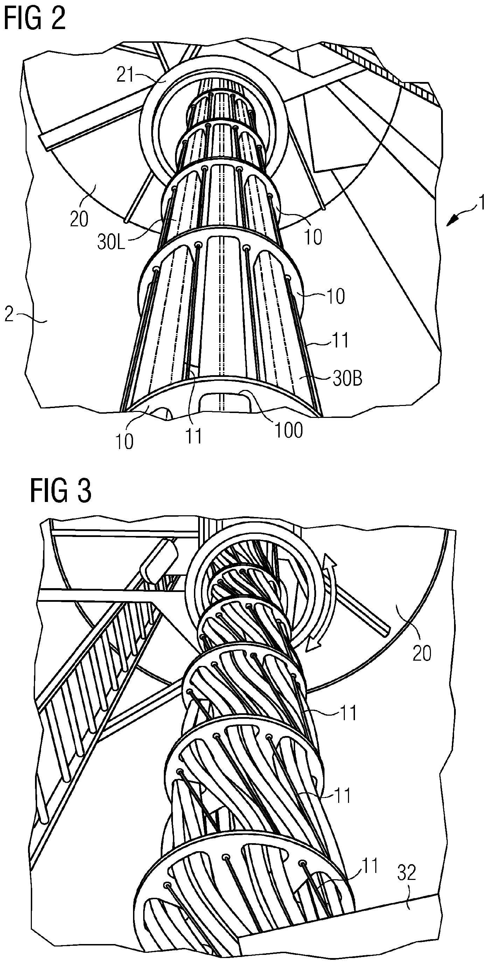

Fig. 2 shows an embodiment of a cable support arrangement 1 according to the invention in a first position, viewed from below inside the tower, looking upward towards an entry point 21 at the top level 20 of the tower 2. Here, the nacelle is in a 'null' position and the power cables 30 of the power cable loop 30L hang straight down from the top level 20 of the tower 2. The power cables are arranged in bundles 30B of three power cables 30 for a three-phase generator. Several cable bundle guides 10 are used to hold the power cable bundles 30B at a certain distance from each other. Adjacent pairs of cable bundle guides 10 are secured to each other by wires 11 of essentially equal length. The wires 11 ensure that the cable bundle guides 10 cannot slip down along the power cable loop 30L. As long as an uppermost cable bundle guide 10 is secured near the upper level 20, for example close to a point of entry 21, the positions of the remaining cable bundle guides 10 are fixed.

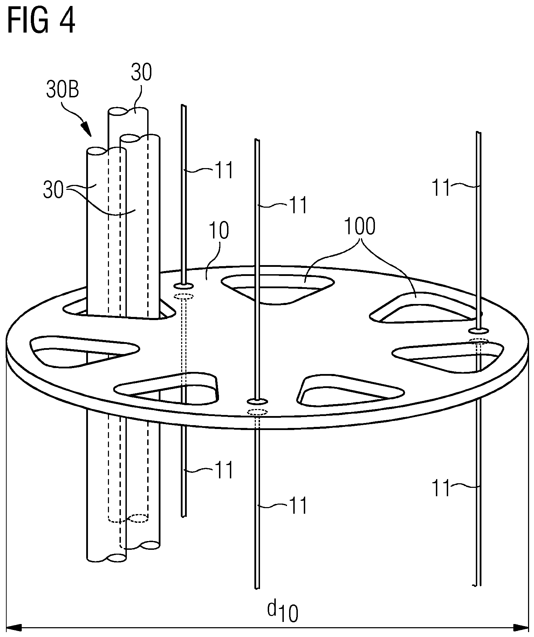

Fig. 3 shows the cable support arrangement 1 of Fig. 2 in a second position. Here, the nacelle has been yawed by some amount, so that the power cable loop 30L has twisted, and a torque arm 32 has moved upward by a corresponding amount. The cable bundle guides 10 ensure that the power cable bundles 30B retain their relative orientations. The shape of a through-opening 100 ensures that damage to the cables 30 of a power cable bundle 30B is avoided. This is shown in Fig. 4, which illustrates an exemplary form of a cable bundle guide 10 with seven through-holes 100, each of which is dimensioned to accommodate a three-cable bundle 30B with some ease. The edges of the through-holes 100 are rounded to avoid pressure points acting on the power cables when the power cable loop 30L is twisted. Because the power cables are arranged in bundles 30B, the diameter d₁₀ of the cable bundle guide 10 can be significantly smaller compared to prior art arrangements.

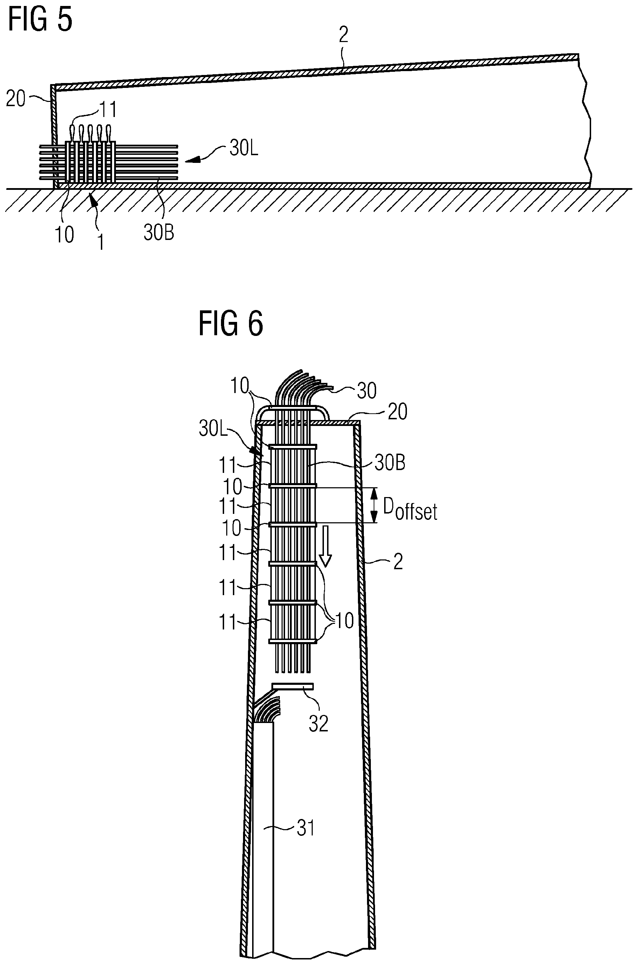

Fig. 5 shows a first step of the method according to the invention. Here, the tower 2 is lying in an essentially horizontal position, for example on board an installation vessel if the tower 2 is to be erected at an offshore location. A power cable loop 30L is introduced into the top level 20 of the tower 2 and secured close to the point of entry 21, which can be a circular opening in the top level 20 of the tower 2. The power cables of the power cable loop 30L are arranged in bundles 30B of three. The cable bundle guides 10 of a cable support arrangement according to the invention are slipped over the power cable bundles 30B, and a first cable bundle guide is secured near the top level 20. Adjacent cable bundle guides 10 may already have been connected by wires 11 (of which only some are shown for the sake of clarity), or they may be connected at this stage. The wire lengths are chosen to obtain the desired maximum offset between adjacent cable bundle guides 10.

Fig. 6 shows a second step of the method according to the invention. Here, the tower 2 has been hoisted into a vertical position. The power cable loop 30L, which is secured near the top level 20, hangs down into the tower 2. The upper ends of the power cables 30 can later be electrically connected to the stator poles of the generator. The cable bundle guides 10 can simply drop down to their pre-ordained levels, as indicated by the larger arrow, since an uppermost cable bundle guide 10 is fixed at an upper level, for example at the topmost tower level 20, and the remaining cable bundle guides 10 are connected pair-wise by the offset wires 11. Adjacent cable bundle guides 10 are therefore held apart by a maximum offset distance, and one such offset distance D_{offset} is shown here by way of example. A lowest cable bundle guide 10 can be secured to a torque arm 32, which is hinged so that it can respond to a shortening or lengthening of the power cable loop 30L, when the wind turbine is later made operational. The lower ends of the power cables 30 can be connected to the fixed transmission cable arrangement 31. For the sake of clarity, the power cable loop 30L and transmission cable arrangement 31 are shown spatially separate in the diagram. At this stage, as will be known to the skilled person, the power cable loop 30L will extend to a level somewhat below the torque arm 32, so that there is some slack in the power cable loop 30L when it is initially connected to the transmission cable arrangement 31. Later, during operation of the wind turbine and during a yaw manoeuvre, the power cable loop 30L can twist and shorten, and the torque arm can move upward by a corresponding amount.

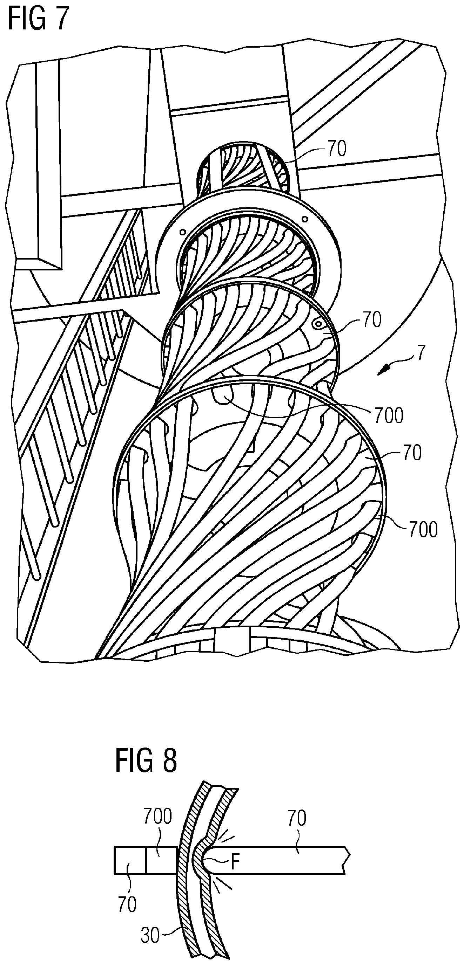

Fig. 7 shows a prior art power cable loop arrangement 7. Here, the power cables of the power cable loop are individually passed through a circular arrangement of holes 700 in cable guides 70. This approach requires a relatively large diameter for the cable guides 70, since the power cables must be kept at a certain distance from each other, and a circular arrangement is required. The wide diameter of the cable guide 70 results in an unfavourable bending of the power cables for large degrees of yaw, since the power cable loop twists and is shortened, and this action causes a power cable to press against the through-hole 700 in the cable guide 70. Particularly when the generator is running near rated power output, the power cables can get hot, and the combination of heat and pressure may result in lasting damage to the power cable. This is illustrated in Fig. 8, which shows a cross-section through a power cable 30 and a prior art cable guide 70. At a large yaw angle, the power cable loop may be twisted to such an extent that a power cable 30 is pressed against the edge of the through-hole 700 in the cable guide 70. The result may be a bent cable, worn cable insulation or fractured strands of the cable core. Such a cable fault F in the cable 30 remains even after the power cable loop untwists at a later stage.

Although the present invention has been disclosed in the form of preferred embodiments and variations thereon, it will be understood that numerous additional modifications and variations could be made thereto without departing from the scope of the invention as defined by the appended claims.

For the sake of clarity, it is to be understood that the use of "a" or "an" throughout this application does not exclude a plurality, and "comprising" does not exclude other steps or elements.

## Claims

1. A cable support arrangement (1) realised to support a plurality of power cable bundles (30B) in an upper region of a wind turbine tower (2), which cable support arrangement (1) comprises
- a plurality of cable bundle guides (10), wherein a cable bundle guide (10) comprises a plurality of through-openings (100), wherein each through-opening (100) is realised to encompass a power cable bundle (30B) comprising a plurality of power cables (30); and
- an offset fixation means (11) realised to maintain an offset distance between consecutive cable bundle guides (10), **characterized in that** the offset fixation means (11) comprises at least three connecting wires (11) extending between each pair of consecutive cable bundle guides (10) and fixed to each of the pair of consecutive cable bundle guides (10).

2. A cable support arrangement according to claim 1, wherein the offset fixation means (11) comprises a length that determines a maximum offset distance (D_{offset}) between the consecutive cable bundle guides (10).

3. A cable support arrangement according to any of the preceding claims, wherein the connecting wires (11) are distributed equidistantly.

4. A cable support arrangement according to any of the preceding claims, comprising at least four cable bundle guides (10), more preferably at least six cable bundle guides (10) .

5. A cable support arrangement according to any of the preceding claims, wherein each cable bundle guide (10) comprises at least seven through-openings (100).

6. A cable support arrangement according to any of the preceding claims, wherein a cable bundle guide (10) has a diameter (d₁₀) of at most 400 mm, more preferably at most 375 mm; most preferably at most 350 mm.

7. A cable support arrangement according to any of the preceding claims, wherein the shape of a through-opening (100) is based on a cross-sectional shape of a power cable bundle (30B).

8. A cable support arrangement according to any of the preceding claims, wherein the cable bundle guides (10) comprise an essentially identical arrangement of through-openings (100).

9. A wind turbine comprising
- a nacelle (4) mounted on top of a tower (2);
- a generator (3) inside the nacelle (4) for generating electricity;
- a plurality of power cable bundles (30B) extending from the generator (3) to a transmission cable arrangement (31) in an upper region of the tower (2), and arranged to allow a rotational displacement of the nacelle (4) about a vertical axis; and
- a cable support arrangement (1) according to any of claims 1 to 8 to support the plurality of power cable bundles (30B) in the upper region of the tower (2).

10. A method of installing a cable support arrangement (1) according to any of claims 1 to 8 in an upper region of a wind turbine tower (2), which method comprises the steps of
- sliding the plurality of cable bundle guides (10) over a previously installed plurality of power cable bundles (30B) ;
- securing an upper cable bundle guide (10) in the vicinity of a power cable entry point (21); and
- securing a lower cable bundle guide in the vicinity of a power cable termination point.

11. A method according to claim 10, wherein at least the first method step is carried out while the wind turbine tower (2) is in a horizontal position.

12. A method according to claim 10 or claim 11, wherein the lower cable bundle guide (10) is secured to a vertical displacement means (32).

## Patentansprüche

1. Kabelhalteranordnung (1), die zum Abstützen mehrerer Stromkabelbäume (30B) in einem oberen Bereich eines Windturbinenturms (2) ausgeführt ist, wobei die Kabelhalteranordnung (1) Folgendes umfasst:
- mehrere Kabelbaumführungen (10), wobei eine Kabelbaumführung (10) mehrere Durchgangsöffnungen (100) umfasst, wobei jede Durchgangsöffnung (100) dazu ausgeführt ist, einen Stromkabelbaum (30B), der mehrere Stromkabel (30) umfasst, zu umfassen; und
- ein Versatzfixiermittel (11), das dazu ausgeführt ist, einen Versatzabstand zwischen aufeinander folgenden Kabelbaumführungen (10) aufrechtzuerhalten, **dadurch gekennzeichnet, dass**
das Versatzfixiermittel (11) mindestens drei Verbindungsdrähte (11) umfasst, die sich zwischen jedem Paar aufeinander folgender Kabelbaumführungen (10) erstrecken und an jeder von dem Paar aufeinanderfolgender Kabelbaumführungen (10) fixiert sind.

2. Kabelhalteranordnung nach Anspruch 1, wobei das Versatzfixiermittel (11) eine Länge aufweist, die einen maximalen Versatzabstand (D_{Versatz}) zwischen den aufeinander folgenden Kabelbaumführungen (10) bestimmt.

3. Kabelhalteranordnung nach einem der vorhergehenden Ansprüche, wobei die Verbindungsdrähte (11) äquidistant verteilt sind.

4. Kabelhalteranordnung nach einem der vorhergehenden Ansprüche, die mindestens vier Kabelbaumführungen (10), vorzugsweise mindestens sechs Kabelbaumführungen (10), umfasst.

5. Kabelhalteranordnung nach einem der vorhergehenden Ansprüche, wobei jede Kabelbaumführung (10) mindestens sieben Durchgangsöffnungen (100) umfasst.

6. Kabelhalteranordnung nach einem der vorhergehenden Ansprüche, wobei eine Kabelbaumführung (10) einen Durchmesser (d₁₀) von höchstens 400 mm, vorzugsweise höchstens 375 mm, besonders bevorzugt höchstens 350 mm, aufweist.

7. Kabelhalteranordnung nach einem der vorhergehenden Ansprüche, wobei die Form einer Durchgangsöffnung (100) auf einer Querschnittsform eines Stromkabelbaums (30B) basiert.

8. Kabelhalteranordnung nach einem der vorhergehenden Ansprüche, wobei die Kabelbaumführungen (10) eine im Wesentlichen identische Anordnung von Durchgangsöffnungen (100) umfassen.

9. Windturbine, umfassend:
- eine Gondel (4), die oben auf einem Turm (2) angebracht ist;
- einen Generator (3) innerhalb der Gondel (4) zum Erzeugen von Elektrizität;
- mehrere Stromkabelbäume (30B), die sich von dem Generator (3) zu einer Übertragungskabelanordnung (31) in einem oberen Bereich des Turms (2) erstrecken und dazu angeordnet sind, eine Drehverschiebung der Gondel (4) um eine vertikale Achse zu gestatten; und
- eine Kabelhalteranordnung (1) nach einem der Ansprüche 1 bis 8 zum Abstützen der mehreren Stromkabelbäume (30B) im oberen Bereich des Turms (2),

10. Verfahren zum Installieren einer Kabelhalteranordnung (1) nach einem der Ansprüche 1 bis 8 in einem oberen Bereich eines Windturbinenturms (2), wobei das Verfahren die folgenden Schritte umfasst:
- Schieben der mehreren Kabelbaumführungen (10) über mehrere zuvor installierte Stromkabelbäume (30B);
- Befestigen einer oberen Kabelbaumführung (10) in der Nähe eines Stromkabeleintrittspunkts (21); und
- Befestigen einer unteren Kabelbaumführung in der Nähe eines Stromkabelendpunkts.

11. Verfahren nach Anspruch 10, wobei mindestens der erste Verfahrensschritt durchgeführt wird, während sich der Windturbinenturm (2) in einer horizontalen Position befindet.

12. Verfahren nach Anspruch 10 oder Anspruch 11, wobei die untere Kabelbaumführung (10) an einem Vertikalverschiebungsmittel (32) befestigt ist.

## Revendications

1. Agencement de support de câbles (1) réalisé pour supporter une pluralité de faisceaux de câbles d'alimentation (30B) dans une région supérieure d'une tour (2) d'éolienne, lequel agencement de support de câbles (1) comprend
- une pluralité de guides de faisceau de câbles (10), un guide de faisceau de câbles (10) comprenant une pluralité d'ouvertures traversantes (100), chaque ouverture traversante (100) étant réalisée pour englober un faisceau de câbles d'alimentation (30B) comprenant une pluralité de câbles d'alimentation (30) ; et
- un moyen de fixation de décalage (11) réalisé pour maintenir une distance de décalage entre des guides consécutifs de faisceau de câbles (10), **caractérisé en ce que** le moyen de fixation de décalage (11) comprend au moins trois fils de connexion (11) s'étendant entre chaque paire de guides consécutifs de faisceau de câbles (10) et fixes pour chacun de la paire de guides consécutifs de faisceau de câbles (10).

2. Agencement de support de câbles selon la revendication 1, dans lequel le moyen de fixation de décalage (11) comprend une longueur qui détermine une distance de décalage maximale (D_{offset}) entre les guides consécutifs de faisceau de câbles (10).

3. Agencement de support de câbles selon l'une quelconque des revendications précédentes, dans lequel les fils de connexion (11) sont distribués de manière équidistante.

4. Agencement de support de câbles selon l'une quelconque des revendications précédentes, comprenant au moins quatre guides de faisceau de câbles (10), plus préférablement au moins six guides de faisceau de câbles (10).

5. Agencement de support de câbles selon l'une quelconque des revendications précédentes, dans lequel chaque guide de faisceau de câbles (10) comprend au moins sept ouvertures traversantes (100).

6. Agencement de support de câbles selon l'une quelconque des revendications précédentes, dans lequel un guide de faisceau de câbles (10) a un diamètre (d₁₀) d'au plus 400 mm, plus préférablement d'au plus 375 mm ; de manière préférée entre toutes d'au plus 350 mm.

7. Agencement de support de câbles selon l'une quelconque des revendications précédentes, dans lequel la forme d'une ouverture traversante (100) est basée sur une forme transversale d'un faisceau de câbles d'alimentation (30B).

8. Agencement de support de câbles selon l'une quelconque des revendications précédentes, dans lequel les guides de faisceau de câbles (10) comprennent un agencement sensiblement identique d'ouvertures traversantes (100).

9. Éolienne comprenant
- une nacelle (4) montée sur le dessus d'une tour (2) ;
- un générateur (3) à l'intérieur de la nacelle (4) pour générer de l'électricité ;
- une pluralité de faisceaux de câbles d'alimentation (30B) s'étendant depuis le générateur (3) vers un agencement de câble de transmission (31) dans une région supérieure de la tour (2), et agencés pour permettre un déplacement par rotation de la nacelle (4) autour d'un axe vertical ; et
- un agencement de support de câbles (1) selon l'une quelconque des revendications 1 à 8 pour supporter la pluralité des faisceaux de câbles d'alimentation (30B) dans la région supérieure de la tour (2).

10. Procédé d'installation d'un agencement de support de câbles (1) selon l'une quelconque des revendications 1 à 8 dans une région supérieure d'une tour (2) d'éolienne, lequel procédé comprend les étapes de
- coulissement de la pluralité de guides de faisceau de câbles (10) sur une pluralité précédemment installée de faisceaux de câbles d'alimentation (30B) ;
- fixation solide d'un guide supérieur de faisceau de câbles (10) à proximité d'un point d'entrée de câble d'alimentation (21) ; et
- fixation solide d'un guide inférieur de faisceau de câbles à proximité d'un point de terminaison de câble d'alimentation.

11. Procédé selon la revendication 10, dans lequel au moins la première étape de procédé est exécutée lorsque la tour (2) d'éolienne se trouve dans une position horizontale.

12. Procédé selon la revendication 10 ou la revendication 11, dans lequel le guide inférieur de faisceau de câbles (10) est solidement fixé à un moyen de déplacement vertical (32).
